# EUROPEAN PATENT SPECIFICATION

(11) **EP 3 712 018 B1**
(45) Date of publication and mention of the grant of the patent: **18.08.2021**
(21) Application number: 18880793.7
(22) Date of filing: 25.09.2018
(51) Int. Cl.: B60R 22/10, B60N 2/26, B60N 2/28, B60R 22/26

(54) **DETACHABLE CROTCH STRAP FOR CHILD SAFETY SEATCHILD SAFETY SEAT**
ABNEHMBARER SCHRITTGURT FÜR KINDERSITZ
SANGLE D'ENTREJAMBE DÉTACHABLE POUR SIÈGE DE SÉCURITÉ ENFANT, ET SIÈGE DE SÉCURITÉ ENFANT

(30) Priority: 23.11.2017 CN 201721579442 U
(43) Date of publication of application: 23.09.2020
(73) Proprietor: Hangzhou Yuemeng Industry Co., Ltd., Zhejiang 311241 (CN)
(72) Inventor: QIAN, Jianhong, Hangzhou Zhejiang 311241 (CN); YUAN, Jianhong, Hangzhou Zhejiang 311241 (CN); QIU, Hangjian, Hangzhou Zhejiang 311241 (CN); FAN, Qianglong, Hangzhou Zhejiang 311241 (CN); LIU, Mingjun, Hangzhou Zhejiang 311241 (CN); SHEN, Chaoyang, Hangzhou Zhejiang 311241 (CN)
(74) Representative: Ezcurra Zufia, Maria Antonia
(86) International application number: PCT/CN2018/107230
(87) International publication number: WO 2019/100840

(56) References cited:
- CN-A- 101 372 219
- CN-A- 105 774 604
- CN-U- 204 055 702
- CN-U- 204 055 702
- CN-U- 204 077 596
- CN-U- 207 449 686
- KR-A- 20100 009 076
- US-A- 5 755 235

## Description

### Technical Field

This invention relates to a detachable crotch belt, in particular to a detachable crotch belt for child safety seat.

### Background Art

With respect to the crotch belt in the existing child safety seats, the crotch belt and the child safety seat are integral, which causes certain inconvenience in the process of use, and the safety factor is reduced in the case of special circumstances.

The Chinese patent utility model CN204055702U discloses a crotch belt for a child safety seat according to the preamble of claim 1, having an upper crotch belt adjusting structure, the said child safety seat includes a seat for a child to sit on, a crotch belt provided on the seat, and a safety belt that can be opened or fastened with the upper portion of the said crotch belt, wherein the crotch belt is adjustably disposed on the seat in the back-and-forth direction through the crotch belt adjusting structure, the said crotch belt adjusting structure includes a sliding member slidably disposed on the seat in the back-and-forth direction, and the bottom of the said crotch belt is fixedly connected with the sliding member; when the said safety belt is connected with the said crotch belt, the said safety belt pulls the said crotch belt and the sliding member to move back and forth, so that the said crotch belt is in close contact with the crotch of the child This structure is a crotch belt adjusting mechanism, which can only adjust the tightness of the crotch belt, and cannot be detached from the crotch belt; in addition, there is a certain inconvenience in operation, and the safety performance cannot be improved.

### Summary of the invention

The invention mainly solves the deficiencies in the prior art, and provides a detachable crotch belt for child safety seat with high structural compactness, convenient removal and installation, and higher safety and convenience of operation.

This invention solves the above technical problems through the following technical solution:

A detachable crotch belt for child safety seat, comprising a seat and a detachable crotch belt; the said detachable crotch belt is movably connected with the seat through a locking assembly, and the said seat is provided with a crotch belt insertion hole;

The said locking assembly includes a lock case, a rotation stopping tongue and an unlock button iron vane, the said lock case is provided with a crotch belt insertion groove communicating with the crotch belt insertion hole, the said lock case is provided with a lock tongue rotating elastically along the lock case, the said lock tongue matches with the crotch belt insertion groove, and the said detachable crotch belt movably matches with the lock tongue;

The said rotation stopping tongue slides limitedly along the lock case, the said rotation stopping tongue movably matches with the lock tongue, the said rotation stopping tongue is elastically connected with the lock case, one end of the said unlock button iron vane shifts through the unlock button, the said unlock button is elastically connected with the unlock button iron vane, and the other end of the said unlock button iron vane drives the rotation stopping tongue to shift through the unlock button lever.

Preferably, the bottom of the detachable crotch belt is provided with a crotch belt lock ring which is movably locked with the lock tongue, the said lock tongue and the lock case return elastically through the lock tongue reed, the said rotation stopping tongue sleeve has a rotation stopping tongue spring which is elastically connected with the lock case, and the said unlock button sleeve has a button reset spring.

Preferably, the said unlock button is disposed on an outer wall of the seat, and the said unlock button lever is "Z"-shaped.

### Description of the mechanism components:

1. Unlock button: Press the button, then the lock tongue rotates to unlock under the action of the mechanism, and the crotch belt can be removed. CN 207449686 U Specification Page 2 of 2
2. Button reset spring: When the external force is lost, the button returns to the original position under the action of the spring.
3. Unlock button iron vane: It is integrally fixed with the button by screws, and transfers the action of pushing the button forward to the unlocking lever.
4. Unlock button lever: It transfers the button action to the rotation stopping tongue to drive the rotation stopping tongue to slide back and forth.
5. Rotation stopping tongue: It slides back and forth along the long groove on the lock case to lock the lock tongue.
6. Rotation stopping tongue spring: It always gives a forward pushing force to the rotation stopping tongue.
7. Lock case: It is fixed on the safety seat, with a sliding rail for the rotation stopping tongue, and a hole for fixing the lock tongue rotation pin on it.
8. Lock tongue: It rotates to lock the crotch belt lock ring and the crotch belt.
9. Lock tongue rotation pin: The lock tongue can rotate around the pin, and the pin is used to fix the left and right lock cases.
10. Lock tongue reed: It provides an unlocking rotational force for the lock tongue.
11. Crotch belt lock ring: It is a part of the crotch belt, and the crotch belt will be locked by locking the ring.

### Working principle:

The rotation stopping tongue locks the lock tongue, the lock tongue locks the crotch belt lock ring, and the crotch belt is firmly fixed and cannot be removed.

Push the unlock button to the left with the finger, the unlock button iron vane also slide to the left when the button is pushed. Under the push of the iron vane, the unlock button level rotates a certain angle, the upper end of the lever prods the rotation stopping tongue to move to the right along the sliding slot on the lock case, and the rotation stopping tongue disengages the locking surface of the lock tongue.

When the rotation stopping tongue disengages the locking surface of the lock tongue, the mechanism unlocks. Under the action of the lock tongue reed, the lock tongue rotates a certain angle counterclockwise around the pin on the lock case. When it rotates to the maximum angle, the crotch belt lock ring disengages to release from the restriction of the lock tongue, and the entire crotch belt can be removed.

If the crotch belt needs to be reinstalled, just press down the crotch belt; under the downward pressing force of the crotch belt lock ring, the lock tongue rotates clockwise; when it rotates to a certain angle, the rotation stopping tongue slides to the left under the action of the rotation stopping tongue spring and gets to the locking surface of the lock tongue, so that the lock tongue will not rotate counterclockwise, and the lock tongue is locked; meanwhile, the lock tongue locks the crotch belt locking ring, and the crotch belt is firmly fixed and cannot be removed.

Therefore, a detachable crotch belt for child safety seat according to this invention has a compact structure and is easy to remove, further improving the safety of use.

### Description of the Drawings

Figure 1 is an exploded view of the structure of the invention;
Figure 2 is a schematic view of the internal structure of the invention;
Figure 3 is a crotch-sectional view of the structure of the invention.

### Detailed Description of the Preferred Embodiments

The technical solution of this utility model will be further described below by way of embodiments and with reference to the accompanying drawings.

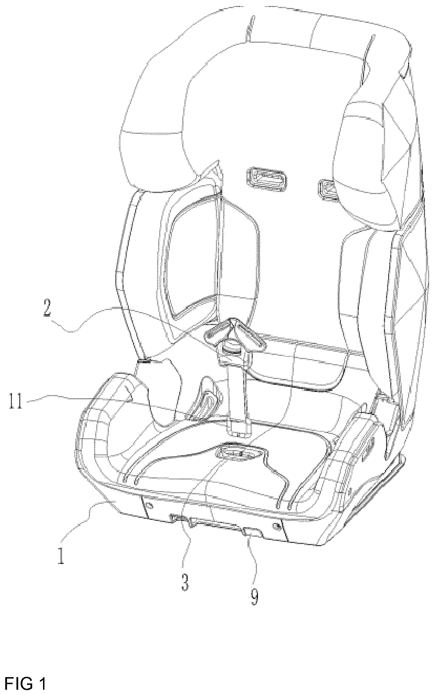

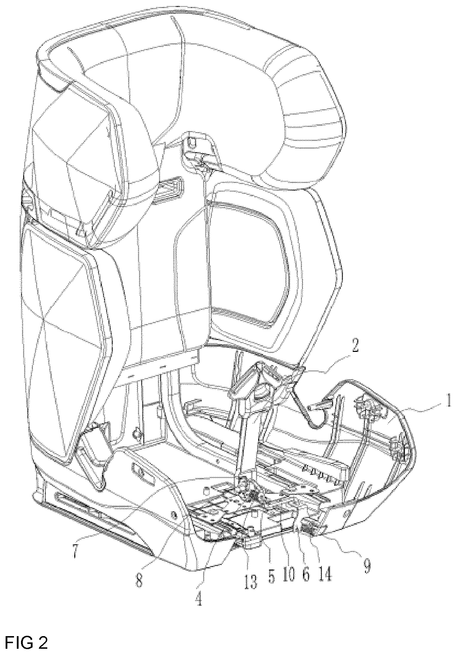

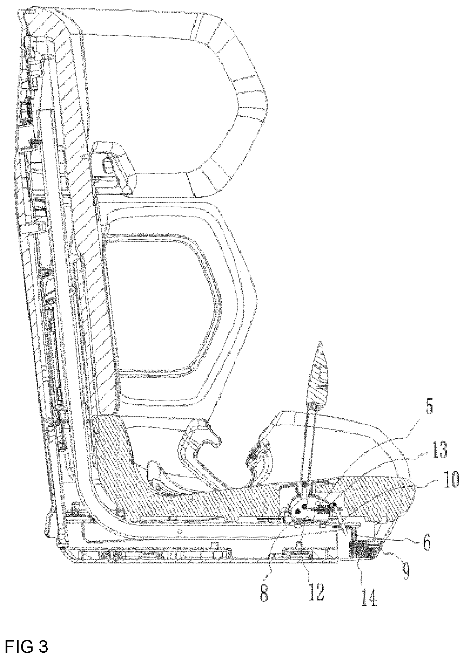

Embodiment 1: As shown in Figures 1 , 2 and 3 , a detachable crotch belt for child safety seat, comprising a seat 1 and a detachable crotch belt 2, the said detachable crotch belt 2 is movably connected with the seat 1 through a locking assembly, and the said seat 1 is provided with a crotch belt insertion hole 3; CN 207449686 U Specification Page 3 of 3

The said locking assembly includes a lock case 4, a rotation stopping tongue 5 and an unlock button iron vane 6, the said lock case 4 is provided with a crotch belt insertion groove 7 communicating with the crotch belt insertion hole 3, the said lock case 4 is provided with a lock tongue 8 rotating elastically along the lock case 4, the said lock tongue 8 matches with the crotch belt insertion groove 7, and the said detachable crotch belt 2 movably matches with the lock tongue 8;

The said rotation stopping tongue 5 slides limitedly along the lock case 4, the said rotation stopping tongue 5 movably matches with the lock tongue 8, the said rotation stopping tongue 5 is elastically connected with the lock case 4, one end of the said unlock button iron vane 6 shifts through the unlock button 9, the said unlock button 9 is elastically connected with the unlock button iron vane 6, and the other end of the said unlock button iron vane 6 drives the rotation stopping tongue 5 to shift through the unlock button lever 10.

The bottom of the said detachable crotch belt 2 is provided with a crotch belt lock ring 11 which is movably locked with the lock tongue 8, the said lock tongue 8 and the lock case 4 return elastically through the lock tongue reed 12, the said rotation stopping tongue 5 sleeve has a rotation stopping tongue spring 13 which is elastically connected with the lock case 4, and the said unlock button 9 sleeve has a button reset spring 14.

The said unlock button 9 is disposed on an outer wall of the seat 1, and the said unlock button lever 10 is "Z"-shaped.

## Claims

1. Child safety seat having a crotch belt (2), **characterized in that** it the crotch belt (2) is detachable, and is movably connected with the seat (1) through a locking assembly, and the said seat (1) is provided with a crotch belt insertion hole (3); said locking assembly includes a lock case (4), a rotation stopping tongue (5) and an unlock button iron vane (6), the said lock case (4) is provided with a crotch belt insertion groove (7) communicating with the crotch belt insertion hole (3), the said lock case (4) is provided with a lock tongue (8) rotating elastically along the lock case (4), the said lock tongue (8) matches with the crotch belt insertion groove (7), and the said detachable crotch belt (2) movably matches with the lock tongue (8); said rotation stopping tongue (5) slides limitedly along the lock case (4), the said rotation stopping tongue (5) movably matches with the lock tongue (8), the said rotation stopping tongue (5) is elastically connected with the lock case (4), one end of the said unlock button iron vane (6) shifts through the unlock button (9), the said unlock button (9) is elastically connected with the unlock button iron vane (6), and the other end of the said unlock button iron vane (6) drives the rotation stopping tongue (5) to shift through an unlock button lever (10).

2. Child safety seat according to claim 1, **characterized in that** the bottom of the said detachable crotch belt (2) is provided with a crotch belt lock ring (11) which is movably locked with the lock tongue (8), the said lock tongue (8) and the lock case (4) return elastically through the lock tongue reed (12), the said rotation stopping tongue (5) sleeve has a rotation stopping tongue spring (13) which is elastically connected with the lock case (4), and the said unlock button (9) sleeve has a button reset spring (14).

3. Child safety seat according to claim 1 or 2, **characterized in that** the said unlock button (9) is disposed on an outer wall of the seat (1), and the said unlock button lever (10) is "Z"-shaped.

## Patentansprüche

1. Kindersitz mit einem Schrittgurt (2), **dadurch gekennzeichnet, dass** der Schrittgurt (2) abnehmbar ist und durch eine Verriegelungsbaugruppe beweglich mit dem Sitz (1) verbunden ist und dass der besagte Sitz (1) mit einem Schrittgurteinfügeloch (3) versehen ist; dass die besagte Verriegelungsbaugruppe einen Schlosskasten (4), eine Drehstoppzunge (5) und ein Entriegelungsknopfeisenrad (6) umfasst, wobei der besagte Schlosskasten (4) mit einer Schrittgurteinfügenut (7) versehen ist, die mit dem Schrittgurteinfügeloch (3) verbunden ist, der besagte Schlosskasten (4) mit einer Verriegelungszunge (8) versehen ist, die sich elastisch entlang des Schlosskastens (4) dreht, die besagte Verriegelungszunge (8) mit der Schrittgurteinfügenut (7) übereinstimmt und der besagte abnehmbare Schrittgurt (2) beweglich mit der Verriegelungszunge (8) übereinstimmt; dass besagte Drehstoppzunge (5) begrenzt entlang des Schlosskastens (4) gleitet, die besagte Drehstoppzunge (5) beweglich mit der Verriegelungszunge (8) übereinstimmt, die besagte Drehstoppzunge (5) elastisch mit dem Schlosskasten (4) verbunden ist, sich ein Ende des besagten Entriegelungsknopfeisenrades (6) durch den Entriegelungsknopf (9) schiebt, der besagte Entriegelungsknopf (9) elastisch mit dem Entriegelungsknopfeisenrad (6) verbunden ist und das andere Ende dieses Entriegelungsknopfeisenrades (6) die Drehstoppzunge (5) dazu bringt, sich durch einen Entriegelungsknopfhebel (10) zu schieben.

2. Kindersicherheitssitz gemäß Anspruch 1, **dadurch gekennzeichnet, dass** die Unterseite des besagten abnehmbaren Schrittgurtes (2) mit einem Schrittgurtverriegelungsring (11) versehen ist, der beweglich mit der Verriegelungszunge (8) verriegelt ist, wobei die besagte Verriegelungszunge (8) und der Schlosskasten (4) durch das Schlosszungenrohr (12) elastisch zurückkehren, die Hülse der besagten Drehstoppzunge (5) eine Drehstoppzungenfeder (13) aufweist, die elastisch mit dem Schlosskasten (4) verbunden ist und die besagte Hülse des Entriegelungsknopfes (9) eine Knopfrückstellfeder (14) aufweist.

3. Kindersicherheitssitz gemäß Anspruch 1 oder 2, **dadurch gekennzeichnet, dass** der besagte Entriegelungsknopf (9) an einer Außenwand des Sitzes (1) angeordnet ist und der Entriegelungsknopfhebel (10) Z-förmig ist.

## Revendications

1. Siège de sécurité pour enfants comportant une ceinture d'entrejambe (2), **caractérisé en ce que** la ceinture d'entrejambe (2) est détachable et est reliée de manière mobile avec le siège (1) par l'intermédiaire d'un ensemble de verrouillage, et ledit siège (1) est muni d'un trou d'insertion de ceinture d'entrejambe (3) ; ledit ensemble de verrouillage comprend un boîtier de verrouillage (4), une languette d'arrêt de rotation (5) et une ailette de fer à bouton de déverrouillage (6), ledit boîtier de verrouillage (4) est muni d'une rainure d'insertion de ceinture d'entrejambe (7) communiquant avec le trou d'insertion de ceinture d'entrejambe (3), ledit boîtier de verrouillage (4) est muni d'une languette de verrouillage (8) tournant de manière élastique le long du boîtier de verrouillage (4), ladite languette de verrouillage (8) s'adapte à la rainure d'insertion de ceinture d'entrejambe (7), et ladite ceinture d'entrejambe détachable (2) s'adapte de manière mobile à la languette de verrouillage (8) ; ladite languette d'arrêt de rotation (5) glisse de manière limitée le long du boîtier de verrouillage (4), ladite languette d'arrêt de rotation(5) s'adapte de manière mobile à la languette de verrouillage (8), ladite languette d'arrêt de rotation (5) est reliée de manière élastique au boîtier de verrouillage (4), une extrémité de ladite ailette de fer de bouton de déverrouillage (6) se déplace à travers le bouton de déverrouillage (9), ledit bouton de déverrouillage (9) est relié de manière élastique à l'ailette de fer de bouton de déverrouillage (6), et l'autre extrémité de ladite ailette de fer de bouton de déverrouillage (6) entraîne la languette d'arrêt de rotation (5) pour se déplacer par un levier de bouton de déverrouillage (10).

2. Siège de sécurité pour enfant selon la revendication 1, **caractérisé en ce que** le bas de ladite ceinture d'entrejambe détachable (2) est pourvue d'un anneau de verrouillage de ceinture d'entrejambe (11) qui est verrouillé de façon mobile avec la languette de verrouillage (8), ladite languette de verrouillage (8) et le boîtier de verrouillage (4) reviennent élastiquement par l'intermédiaire du peigne de languette de verrouillage (12), ledit manchon de languette d'arrêt de rotation (5) a un ressort de languette d'arrêt de rotation (13) qui est relié élastiquement au boîtier de verrouillage (4), et ledit manchon de bouton de déverrouillage (9) a un ressort de réinitialisation de bouton (14).

3. Siège de sécurité pour enfant selon la revendication 1 ou 1, **caractérisé en ce que** ledit bouton de déverrouillage (9) est disposé sur une paroi extérieure du siège (1), et ledit levier de bouton de déverrouillage (10) est en forme de « Z ».
